# EUROPEAN PATENT SPECIFICATION

(11) **EP 1 719 656 B1**
(45) Date of publication and mention of the grant of the patent: **14.12.2011**
(21) Application number: 05703692.3
(22) Date of filing: 17.01.2005
(51) Int. Cl.: B60K 7/00

(54) **MOTOR-DRIVEN WHEEL DRIVE DEVICE**
MOTORGETRIEBENE RADANTRIEBSVORRICHTUNG
DISPOSITIF D ENTRAINEMENT DE ROUE MOTORISEE

(30) Priority: 23.02.2004 JP 2004045615
(43) Date of publication of application: 08.11.2006
(73) Proprietor: NTN Corporation, Osaka-shi, Osaka 550-0003 (JP)
(72) Inventor: SAITO, Tsuyoshi, NTN Corporation, Iwata-shi, Shizuoka 438-8510 (JP); IWAMOTO, Kenichi, NTN Corporation, Iwata-shi, Shizuoka 438-8510 (JP)
(74) Representative: Cohausz & Florack
(86) International application number: PCT/JP2005/000454
(87) International publication number: WO 2005/080113

(56) References cited:
- DE-A1- 19 805 679
- JP-A- 5 278 476
- JP-A- 5 278 476
- JP-A- 2001 032 888
- JP-A- 2001 032 914
- JP-A- 2001 173 762
- JP-A- 2001 315 534
- JP-A- 2001 315 534
- JP-A- 2004 052 787

## Description

### BACKGROUND OF THE INVENTION

### Field of the Invention

The present invention relates to a motor-driven wheel driving apparatus having a combined wheel bearing and electric motor used for a vehicle such as an electric vehicle, a golf cart or a fork lift truck.

### Description of Background Art

The motor-driven wheel driving apparatus has been proposed to improve the driving efficiency in case of driving a wheel by an electric motor and used for driving a wheel e.g. of an electric car in which the wheel is directly driven by the electric motor. However, since such a motor-driven wheel driving apparatus requires a large torque for an electric motor, it is necessary to use a large motor of high power. This increases not only a manufacturing cost but a weight of vehicle and accordingly makes it difficult to ensure sufficient driving performance.

On the other hand, it has been also proposed a motor-driven wheel driving apparatus (wheel motor) equipped with a reduction gear in which an electric motor and a planetary reduction gear are arranged within a space inside a wheel and the rotational output of the electric motor is transmitted to the wheel via the planetary reduction gear.

When adopting the planetary reduction gear as a reduction gear, its output shaft for transmitting the rotational output of the electric motor to the wheel via the planetary reduction gear has to take out its output with coinciding its axial center to that of the motor shaft after once having been divided in the axial direction of the motor-driven wheel driving apparatus. Accordingly, there are caused problems in such an apparatus that its structure is difficult to assemble and the strength against inclination of wheel during running of vehicle is low because of small supporting span of the output shaft having to be adopted.

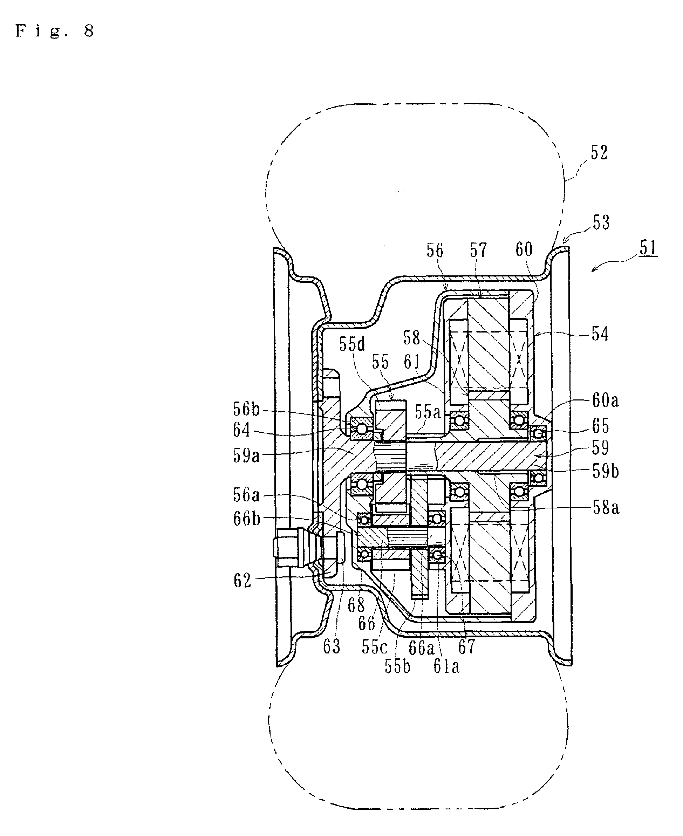

A motor-driven wheel driving apparatus showing a motor that is attached to the axle is known from JP 2001 315534 A. A brake disc is mounted between a hub wheel and a rim of the road wheel. Thus, the speed of revolution of the braking disc is much lower than the speed of revolution of the electrical motor. For solving the above-mentioned problems, there is also known another motor-driven wheel driving apparatus as shown in Fig. 8. The motor-driven wheel driving apparatus 51 contains an electric motor 54 and reduction gear 55 within the inside of a wheel 53 on which a tire 52 is mounted. The wheel 53 can be driven by a rotational output of the electric motor 54.

The electric motor 54 comprises a stator 57 secured to a side of a case 56 arranged inside the wheel 53, a rotor 58 arranged oppositely to the stator 57 within this, and an output shaft 59 for transmitting the rotational out of the rotor 58 to the wheel 53 via the reduction gear 55. The stator 57 and the rotor 58 are secured to a side of the case 56 with being sandwiched by covers 60 and 61 and form the electric motor 54.

One end 59a of the output shaft 59 is integrally formed with a mounting flange 62 on which the wheel 53 is secured via hub bolts 63. The end 59a of the output shaft 59 is rotatably supported by a rolling bearing 64 within a shaft insert aperture 56b of the case 56, and the other end 59b is also rotatably supported by a rolling bearing 65 within a central recess 60a of the outer cover 60.

The reduction gear 55 contained within the case 56 is formed by a plurality of gears 55a, 55b, 55c and 55d. A first gear 55a is arranged coaxially with the end of the rotor 58 and integrally formed therewith. Second and third gears 55b and 55c are secured on a same supporting shaft 66 and thus rotate simultaneously. The second gear 55b and the first gear 55a are meshed with each other. One end 66a of the supporting shaft 66 is rotatably supported by a rolling bearing 67 within a recess 61a of inner cover 61 and its other end 66b is also rotatably supported by a rolling bearing 68 within a recess 56a of the case 56. The force gear 55d is secured on the output shaft 59 and meshes with the third gear 55c.

According to such a structure, since the output shaft 59 of the electric motor 54 is rotatably supported at opposite ends of the case 56 with being passed through the aperture of center of rotation of the fourth gear 55d which is a final stage of the reduction gear 55 and also through the shaft inserting aperture 58a of the rotor 58, the apparatus can be easily assembled by sequentially fitting the structural parts of the reduction gear 55, the inner cover 61, the structural parts of the electric motor 54, and the outer cover 60 on the output shaft 59 using it as a reference part. In addition since the output shaft 59 is supported at substantially opposite ends of the motor-driven wheel driving apparatus 51, it is possible to ensure the supporting span of the output shaft 59 and thus to obtain a sufficient supporting strength against the inclination of wheel during running of vehicle (see Japanese Laid-open Patent Publication No. 81436/1995).

### Disclosure of the Invention

### Problems to be solved by the Invention

In such a motor-driven wheel driving apparatus, while the reduction gear 55 can easily assemble various structural parts, the installation space for the rolling bearings 64 and 65 for supporting the output shaft 59 is limited since the electric motor 54 of high rotational output necessarily require a large mounting space. Accordingly, the loading capacity against the inclination of the wheel 53 during running of vehicle i.e. against the moment load becomes insufficient, and thus it has been required to improve the durability of the rolling bearings 64 and 65.

### SUMMARY OF THE INVENTION

It is therefore an object of the present invention to provide a motor-driven wheel driving apparatus which can solve the problems of the prior art and improve the durability of the wheel bearing, reduce the weight and size of the apparatus, and make it easy to assemble and disassemble the apparatus.

### Means for solving the problems

For achieving the object, there is provided, according to the present invention of claim 1, a motor-driven wheel driving apparatus comprising: a wheel bearing, a planetary reduction gear, and a driving section having an electric motor for driving the planetary reduction gear and a rotation member; the wheel bearing including a hub wheel formed with a wheel mounting flange on its one end, an inner ring formed on its outer circumferential surface with at least one of double row inner raceway surfaces, an outer member formed with double row outer raceway surfaces on its inner circumferential surface oppositely to the inner raceway surfaces, and double row rolling elements rollably arranged between the inner and outer raceway surfaces; the planetary reduction gear including an input element mounted on the rotation member, a stationary element mounted on the inner circumferential surface of the outer member, a plurality of planetary elements arranged between the stationary element and the input element, and an output element for supporting the planetary elements rotatably relative to a connecting shaft; the driving section forming the electric motor and having a stator housing mounted on the outer member, a stator portion contained within the stator housing, and a rotor portion secured on the rotation member and arranged oppositely to the stator portion via a predetermined air gap; the connecting shaft removably and torque-transmittably connected to the hub wheel and adapted to drive the wheel by transmitting the rotation of the electric motor to the hub wheel via the planetary reduction gear; wherein the inner ring is press-fitted on a cylindrical portion of the hub wheel and a braking apparatus is integrally mounted on the rotation member.

Adoption of structure defined in claim1 makes it possible to sufficiently ensure the space for the bearing section. In addition since the connecting shaft forming the planetary reduction gear is removably and torque transmittably connected to the hub wheel, it is possible to replace the wheel bearing, the planetary reduction gear and the driving section by easily separating them from each other when carrying out maintenance. Thus it is unnecessary to replace whole the apparatus and thus it is possible to reduce resource as well as maintenance cost.

According to the invention of claim 2, since the planetary reduction gear comprises a sun gear mounted on the rotation member, a plurality of planetary gears meshing both with external teeth of the sun gear and with internal teeth formed on the inner circumferential surface of the outer member, and a carrier pin projected from the outer circumferential portion of the connecting shaft for rotatably supporting the planetary gears, it is possible to efficiently achieve power transmission without any sliding contact and to carry out lubrication by using grease sealed within the bearings. In addition it is possible to suppress application of offset load caused by the moment load to the planetary gears and the sun gear and also to suppress generation of meshing noise caused by meshing between the planetary gears and the sun gear.

According to the invention of claim 1, since a braking apparatus is integrally mounted on the rotation member, cost reduction can be achieved by using common parts. In addition since braking action can be obtained before speed reduction at the planetary reduction gears, it is possible to provide a braking apparatus of light weight and compact size due to reduction of the braking torque.

According to the invention of claim 3, it is preferable that the braking apparatus is a parking brake. Such a structure makes it possible to use common parts and to arrange the parking brake previously arranged at the outboard side at the inboard side and thus to improve the freedom of layout to keep a space around the wheel bearing.

According to the invention of claim 4, the parking brake comprises an intermediate member held on the stator housing, and an actuator for engaging and disengaging the intermediate member with the rotation member by displacing the intermediate member. This makes it possible to integrally connect the parking brake to the driving section and thus to further improve the freedom of layout to keep a space around the wheel bearing.

According to the invention of claim 5, a plurality of recesses are formed on the rotation member, the stator housing is formed with a plurality of through apertures corresponding to the recesses, each the intermediate member having tapered surfaces is contained in the through passage, and the intermediate member can be adapted to be engaged and disengaged with the recess with being displaced by a cylindrical member engaging the tapered surface. Also according to the invention of claim 6, a plurality of recesses and tapered surfaces are formed on the rotation member, the intermediate member is formed with projected portions and tapered surfaces adapted to be engaged respectively with the recesses and the tapered surfaces of the rotation member, and the intermediate member is held so as to be able to transmit a torque to the stator housing and also to be axially displaced. Such a structure i.e. engagement of the intermediate member with the recess of the stator housing makes it possible to assure a larger braking force tan the parking brake of the prior art using a frictional force and thus to more easily achieve the apparatus having a lesser weight and size.

According to the invention of claim 7, the planetary reduction gear has first and second planetary reduction gears connected each other via a connecting shaft, and the power of the electric motor can be adapted to be transmitted to the hub wheel with reducing the rotation of the electric motor to two steps via the first and second planetary reduction gears. This structure makes it possible to obtain a very large reduction ratio in a small space and thus to use an electric motor having smaller size and lighter weight.

According to the invention of claim 8, the first planetary reduction gear comprises a sun gear mounted on the stator housing, a plurality of planetary gears meshing both with external teeth of the sun gear and with internal teeth formed on the inner circumferential surface of the rotation member, and a carrier pin for rotatably supporting the planetary gears relative to a first connecting shaft; the second planetary reduction gear comprises a sun gear mounted on the first connecting shaft, a plurality of planetary gears meshing both with external teeth of the sun gear and with internal teeth formed on the inner circumferential surface of the outer member, and a carrier pin for rotatably supporting the planetary gears relative to a second connecting shaft; and the second connecting shaft is connected to the hub wheel. This structure also makes it possible to assure the bearing space and thus to have a larger reduction ratio in a small space.

According to the invention of claim 9, the stator housing is separably fastened to the outer member. Thus it is possible to replace a part (or parts) by easily separate the wheel bearing and the driving section during maintenance and therefore to reduce resource and maintenance cost.

### Effect of the Invention

The motor-driven wheel driving apparatus of the present invention comprises: a wheel bearing, a planetary reduction gear, and a driving section having an electric motor for driving the planetary reduction gear and a rotation member; the wheel bearing including a hub wheel formed with a wheel mounting flange on its one end, an inner ring press-fitted on a cylindrical portion of the hub wheel and formed on its outer circumferential surface with at least one of double row inner raceway surfaces, an outer member formed with double row outer raceway surfaces on its inner circumferential surface oppositely to the inner raceway surfaces, and double row rolling elements rollably arranged between the inner and outer raceway surfaces; the planetary reduction gear including an input element mounted on the rotation member, a stationary element mounted on the inner circumferential surface of the outer member, a plurality of planetary elements arranged between the stationary element and the input element, and an output element for supporting the planetary elements rotatably relative to a connecting shaft; the driving section forming the electric motor and having a stator housing mounted on the outer member, a stator portion contained within the stator housing, and a rotor portion secured on the rotation member and arranged oppositely to the stator portion via a predetermined air gap; the connecting shaft removably and torque-transmittably connected to the hub wheel and adapted to drive the wheel by transmitting the rotation of the electric motor to the hub wheel via the planetary reduction gear. Thus it is possible to assure a sufficient space for the bearing section, and to easily replace any parts by disassembling during maintenance the wheel bearings, the planetary reduction gear and the driving section. Accordingly it is unnecessary to replace whole the apparatus and thus it is possible to reduce resources and maintenance cost.

### Best mode for carrying out the Invention

Best mode for carrying out the present invention is a motor-driven wheel driving apparatus comprising: a wheel bearing, a planetary reduction gear, and a driving section having an electric motor for driving the planetary reduction gear and a rotation member; the wheel bearing including a hub wheel formed with a wheel mounting flange on its one end, an inner ring press-fitted on a cylindrical portion of the hub wheel and formed on its outer circumferential surface with at least one of double row inner raceway surfaces, an outer member formed with double row outer raceway surfaces on its inner circumferential surface oppositely to the inner raceway surfaces, and double row rolling elements rollably arranged between the inner and outer raceway surfaces; the planetary reduction gear including an input element mounted on the rotation member, a stationary element mounted on the inner circumferential surface of the outer member, a plurality of planetary elements arranged between the stationary element and the input element, and an output element for supporting the planetary elements rotatably relative to a connecting shaft; the driving section forming the electric motor and having a stator housing mounted on the outer member, a stator portion contained within the stator housing, and a rotor portion secured on the rotation member and arranged oppositely to the stator portion via a predetermined air gap; the connecting shaft connected to the hub wheel via a serration and adapted to drive the wheel by transmitting the rotation of the electric motor to the hub wheel via the planetary reduction gear.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal-section view of a first embodiment of a motor-driven wheel driving apparatus of the present invention;
Fig. 2 is a cross-sectional view taken along a line II-II of Fig. 1;
Fig. 3 is a longitudinal-section view of a second embodiment of a motor-driven wheel driving apparatus of the present invention;
Fig. 4 is a partially enlarged perspective view of Fig. 3;
Fig. 5 is a longitudinal-section view of a third embodiment of a motor-driven wheel driving apparatus of the present invention;
Fig. 6 is a longitudinal-section view of a fourth embodiment of a motor-driven wheel driving apparatus of the present invention;
Fig. 7 is a fifth embodiment of a motor-driven wheel driving apparatus of the present invention; and
Fig. 8 is a longitudinal-section view of a motor-driven wheel driving apparatus of the prior art.

### DESCRIPTION OF THE PREFERRED EMBODIMENTS

Preferred embodiments of the present invention will be described with reference to accompanied drawings.

### First embodiment

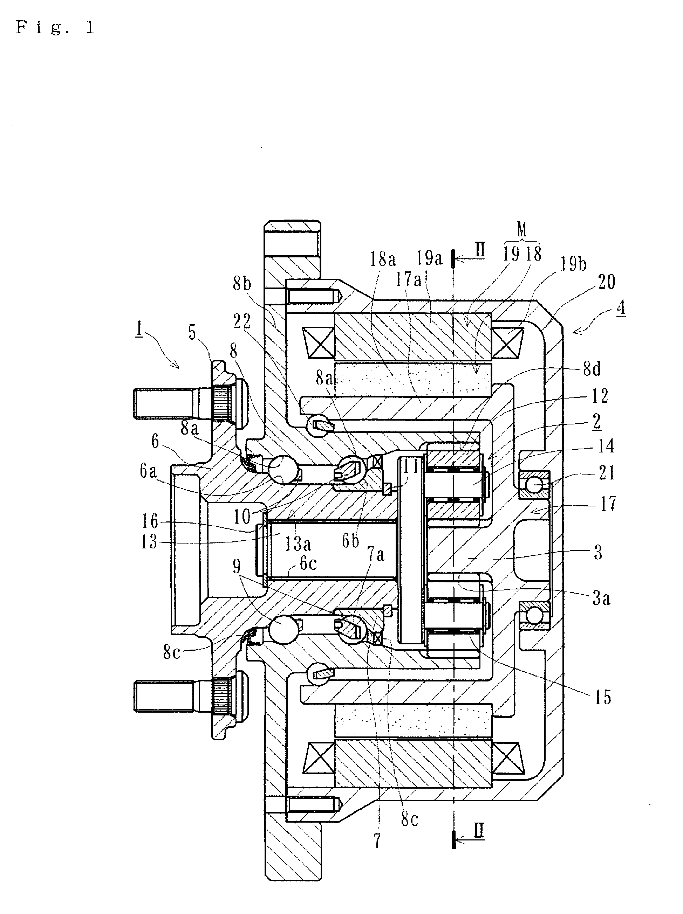

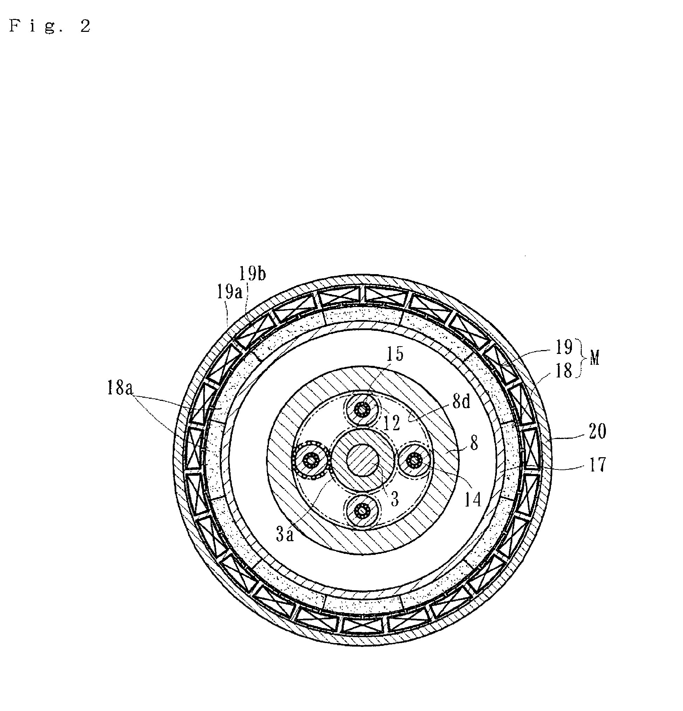

Fig. 1 is a longitudinal-section view of a first embodiment of a motor-driven wheel driving apparatus of the present invention, and Fig. 2 is a cross-sectional view taken along a line II-II of Fig. 1.

; The motor-driven wheel driving apparatus of the present invention mainly comprises a wheel bearing 1, a planetary reduction gear 2 mounted on the wheel bearing 1, and a sun gear 3 forming a portion of the planetary reduction gear 2. In the description of the present invention, a side of a bearing positioned outward a vehicle when it is mounted on a vehicle is referred to as "outboard" side (the left side in a drawing), and a side inward a vehicle is referred to as "inboard" side (the right side in a drawing).

The wheel bearing 1 is a so-called "third generation" bearing used for supporting a driving wheel (not shown). The wheel bearing 1 comprises a hub wheel 6 integrally formed with a wheel mounting flange 5 at the outboard side end, an inner raceway surface 6a and a cylindrical portion 6b extending from the inner raceway surface 6a; an inner ring 7 formed on its outer circumferential surface with an inner raceway surface 7a and fitted onto the cylindrical portion 6b of the hub wheel 6; an outer member (stationary element) 8 integrally formed on its outer circumferential surface with a body mounting flange 8b to be secured on a body of vehicle and also integrally formed on its inner circumferential surface with double row outer raceway surfaces 8a and 8a oppositely arranged to the inner raceway surfaces 6a and 7a; double row rolling elements (balls) 9 rollably contained between the inner and outer raceway surfaces; and a cage 10 for holding the rolling elements 9 equidistantly around the inner raceway surfaces 6a and 7a. Seals 8c and 8c are arranged at either ends of the outer member 8 to prevent leakage of lubricating grease sealed within the bearing and also to prevent penetration of rain water or dusts from the external circumstances.

The outer circumferential surface of the hub wheel 6 is formed with a hardened layer having a surface hardness of 54∼64 HRC at a seal land region at a base of the wheel mounting flange 5 as well as a region from the inner raceway surface 6a to the cylindrical portion 6b. The heat treatment is preferably carried out by high frequency induction quenching because of easiness of setting the depth of the hardened layer. A stop ring 11 is mounted at the end of the cylindrical portion 6b of the hub wheel 6 to prevent the inner ring 7 press-fitted onto the cylindrical portion 6b from being axially slipped out.

Although it is herein illustrated a double row angular ball bearing using balls as rolling elements 9, a double row tapered roller bearing using tapered rollers may be also used. In addition, although it is shown a bearing of the third generation structure in which the inner raceway surface 6a is directly formed on the outer circumferential surface of the hub wheel 6, a so-called second generation structure in which a pair of inner rings are press-fitted onto the cylindrical portion of the hub wheel.

A planetary reduction gear 2 is formed in which internal teeth 8d are formed on an inner circumferential surface at the inboard end of the outer member (stationary element) 8 and 4 planetary gears (planetary elements) 12 meshing with external teeth 3a of a sun gear (input element) 3 are arranged between the sun gear 3 and the outer member 8. The planetary gears 12 are rotatably supported on carrier pins 14 projected from the circumferential portion of the connecting shaft 13 (see Fig. 2). The connecting shaft 13 is formed on its outer circumferential surface with a serration (or spline) 13a which is connected to a serration (or spline) 6c formed on the inner circumferential surface of the hub wheel 6 in a torque transmittable manner. The hub wheel 6 and the connecting shaft 13 are axially detachably secured each other by a stop ring 16 mounted on the end of the connecting shaft 13. Although illustrated in this embodiment is the sun gear 3 directly formed on the rotation member 17 forming the driving section 4, it is possible to form a separate sun gear adapted to be press-fitted onto a rotation shaft projected from the rotation member.

The rotation member 17 is formed as having a cup shape and a rotor portion 18 forming an electric motor M" is secured on the outer circumferential surface of a cylindrical portion 17a of the rotation member 17. The rotor portion 18 comprises a plurality of permanent magnets 18a. A stator portion 19 is arranged oppositely to the rotor portion 18 via a predetermined air gap and is contained within a stator housing 20 formed as a cup shaped configuration. The stator portion 19 comprises a stator iron core 19a and a stator coil 19b wound on the stator iron core 19a. The electric motor "M" is formed by the rotor portion 18 and the stator portion 19 (see Fig. 2).

The rotation member 17 is supported by rolling bearings 21 and 22 rotatably relative to the stator housing 20 and the outer member 8 forming the stationary member. The stator housing 20 is detachably fastened to the body mounting flange 8b by bolts (not shown) to the outer member 8. The rotation member 17 is rotated by supplying electric energy to the electric motor "M", and the rotation of the rotation member 17 is transmitted to the planetary gears 12 via the sun gear 3, and finally the rotation of the planetary gears 12 is transmitted to the hub wheel 6 to rotate a wheel (not shown).

The speed reduction ratio of the planetary reduction gear 2 can be appropriately adjusted by changing a ratio of the number of teeth of the planetary gear 12 and the number of teeth of the outer member 8. For example, a reduction ratio in a range of 3~9 can be set when the planetary reduction gear2 is applied to the motor-driven wheel driving apparatus of electric vehicle. In addition, if desiring to obtain such a level of reduction ratio, it can be sufficiently achieved by reducing the outer diameter of the sun gear 3 and thus the reduction gear is never enlarged in accompanying with the increase of the reduction ratio. Furthermore, a sufficient space for the bearing section can be assured because of meshing of the planetary gears 12 with the internal teeth 8d formed on the inner circumferential surface of the outer member 8 in the wheel bearing apparatus 1, and action of offset load to the planetary gears 12 and the sun gear 3 by the moment load can be suppressed, and furthermore meshing noise caused by meshing between the planetary gears 12 and the sun gear 3 can be also suppressed. In addition since the connecting shaft 13 forming the planetary reduction gear 2 is connected to the hub wheel 6 via the serration 13a, it is possible to replace any parts during maintenance by easily disassembling as a sub unit the wheel bearing 1, the planetary reduction gear 2 and the driving section 4. Thus it is unnecessary to replace whole the apparatus and it is possible to reduce resources and maintenance cost.

Although it is shown in this embodiment that power is transmitted to each element of the planetary reduction gear by the gear transmitting means, other power transmitting means such as friction means (e.g. traction drive) may be used. In this case, noise and vibration caused during power transmission can be largely reduced.

### Second embodiment

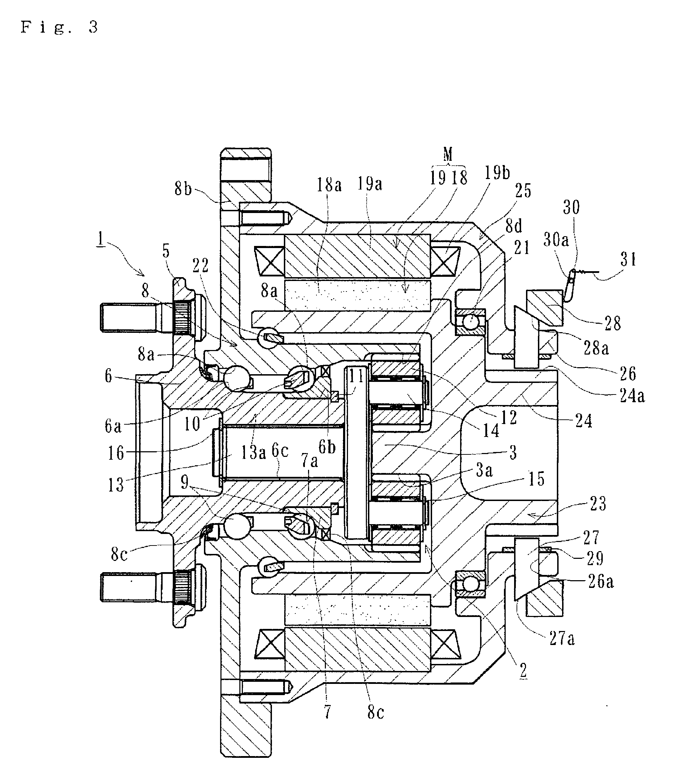

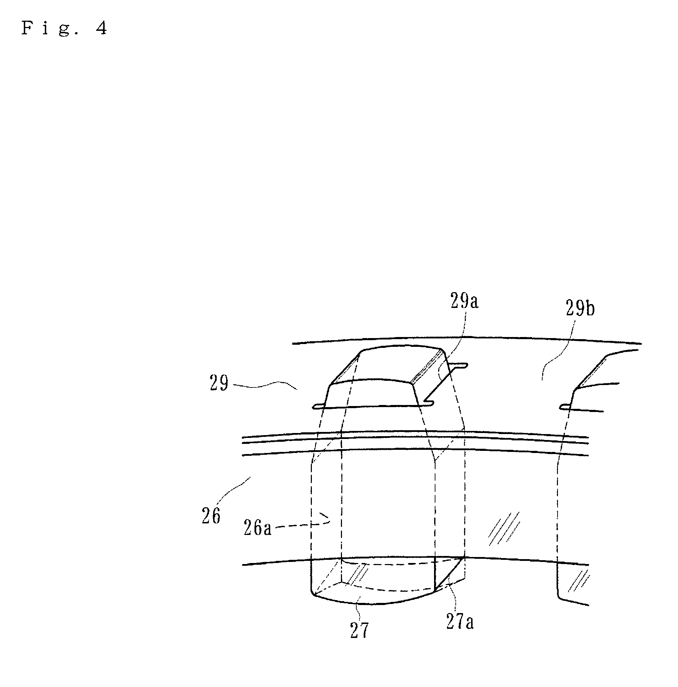

Fig. 3 is a longitudinal-section view of a second embodiment of a motor-driven wheel driving apparatus of the present invention, and Fig. 4 is a partially enlarged perspective view of Fig. 3. Since difference of this embodiment from the first embodiment (Fig. 1) only resides in the structure of the driving section, same numerals are used as those used in the first embodiment for designating the same structural elements and detail description of them will be omitted.

The rotation member 23 is formed with a cylindrical portion 24 extending therefrom toward the inboard side and the cylindrical portion 24 is formed on its outer circumferential surface with a plurality of recesses 24a arranged equidistantly along the outer circumferential surface. The stator housing 25 is formed at its inboard side with a cylindrical portion 26 arranged oppositely to the cylindrical portion 24. The cylindrical portion 26 is also formed with a plurality of through apertures 26a corresponding to the recesses 24a. Each through aperture 26a contains a intermediate member 27. The intermediate member 27 has a substantially rectangular parallelopiped configuration having a steeple tip. An end surface 27a of the intermediate member 27 is tapered and adapted to be sliding contacted with a tapered surface 28a of the cylindrical member 28. A tip end of the intermediate member 27 is received within a pocket 29a of an annular spring member 29.

In Fig. 3, an actuator 30 is arranged near the cylindrical member 28 and swingably supported around a fulcrum 30a. One end of the actuator 30 contacts an end surface of the cylindrical member 28 and the other end of the actuator 30 is connected to a brake wire 31. Actuation of the brake wire 31 causes the actuator 30 to be swung around the fulcrum 30a to displace the cylindrical member 28 axially (toward left side in Fig. 3). This displacement of the cylindrical member 28 causes all the intermediate member 27 to be moved radially inward. Thus the tip end of each intermediate member 27 engages each recess 24a of the rotation member 23. As the result of which, the rotation member 23 and the stator housing 25 are united via the intermediate member 27 and thus the rotation member 23 is secured to the stator housing 25.

Each pocket 28a of the annular spring member 29 is expanded in accordance with movement of the intermediate member 27 and thus a column portion 29b between pockets 29a is elastically deformed (see Fig. 4). Each intermediate member 27 is moved radially outward and returned to its initial position by the restoring force of the elastically deformed column portion 29b. Accordingly, engagement between the recesses 24a of the rotation member 23 and the intermediate member 27 is released and thus the connection between the rotation member 23 and the stator housing 25 is also released.

As described above, the intermediate members 27 can be stably held by the through apertures 26a of the stator housing 25 and the annular spring member 29 and can be smoothly returned to their initial positions by the elastic force of the spring member 29 to generate a stable and reliable braking action. Accordingly, it is possible to reduce number of parts by combining the rotation member 23 forming the electric motor "M" and the parking brake and to generate a braking action by the parking brake prior to reduction of vehicle speed by the planetary reduction gear 2. Thus, According to this embodiment, it is possible to provide a braking apparatus of light weight and compact size. In addition, it is possible to further reduce the weight and size of the braking section since the apparatus of this embodiment generates a larger braking force as compared with a parking brake of the prior art.

### Third embodiment

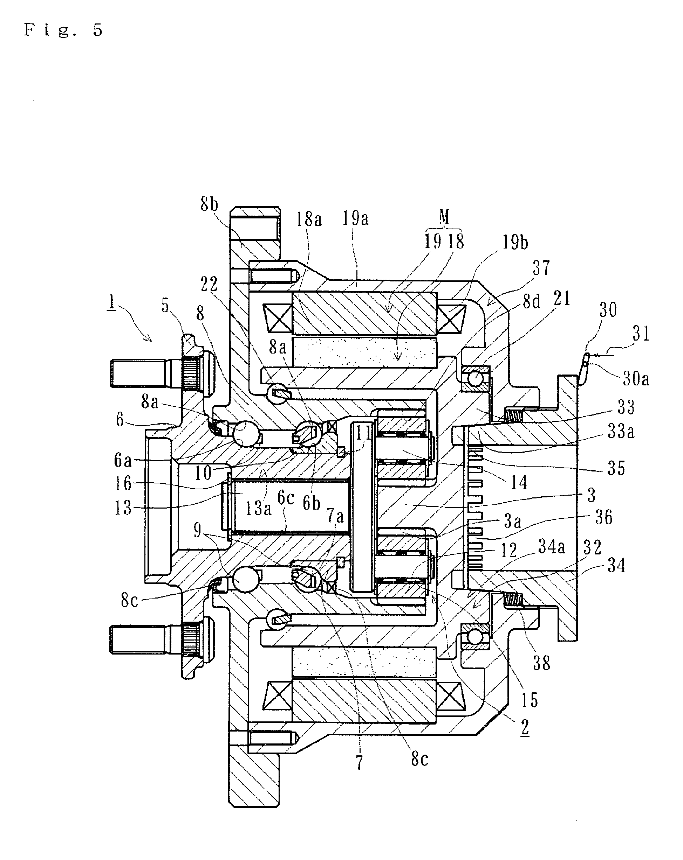

Fig. 5 is a longitudinal-section view of a third embodiment of a motor-driven wheel driving apparatus of the present invention. This third embodiment is different from the second embodiment (Fig. 3) only in the structure of the braking section. Thus same numerals are used herein as those used in the previous embodiments for designating the same structural elements.

The rotation member 32 is formed with a cylindrical portion 33 extending therefrom toward the inboard side and the cylindrical portion 33 is formed with a tapered inner circumferential surface 33a. On the other hand, a ring shaped intermediate member 34 is arranged oppositely to the rotation member 32 and formed on its outer circumferential surface with a tapered surface 34a corresponding to the tapered surface 33a. The rotation member 32 is formed on its side surface at its inboard side with recesses 35 and projected portions 36 adapted to be engaged with the recesses 35 are formed on the end of the intermediate portion 34. In addition, the intermediate member 34 is arranged oppositely to the stator housing 37 via elastic members 38 and also arranged so that it cannot rotate but can axially slide relative to the stator housing 37 e.g. via a serration.

An actuator 30 is arranged near the intermediate member 30 and swingably supported around a fulcrum 30a. One end of the actuator 30 contacts an end surface of the intermediate member 34 and the other end of the actuator 30 is connected to a brake wire 31. Actuation of the brake wire 31 causes the actuator 30 to be swung around the fulcrum 30a to displace the intermediate member 34 axially (toward left side in Fig. 5). This displacement of the intermediate member 34 causes the tapered surfaces 34a of the intermediate member 34 to be contacted with the tapered surface 33a of the rotation member 32 and finally the projected portions 36 of the intermediate member 34 are engaged with the recessed portion 35 of the rotation member 32. As the result of which, the rotation member 32 and the stator housing 37 are united via the intermediate member 34 and thus the rotation member 32 is secured to the stator housing 37. When actuating the brake wire 31 to release the brake, the intermediate member 34 is axially moved toward right hand and returned its initial position by the restoring force of the elastic members 38. Accordingly, engagement between the recesses 35 of the rotation member 32 and projections 36 of the intermediate member 34 is released and thus the connection between the rotation member 32 and the stator housing 37 is also released.

As described above, since intermediate member 34 can be engaged and disengaged relative to the rotation member 32 via slippage engagement and projection/recess engagement, it is possible to effect the braking action while the rotation member 32 is not perfectly stopped and also to generate a stable and reliable braking action by the projection/recess engagement. Accordingly, it is possible to reduce number of parts and the manufacturing cost by combining the rotation member 23 forming the electric motor "M" and the parking brake.

### Fourth embodiment

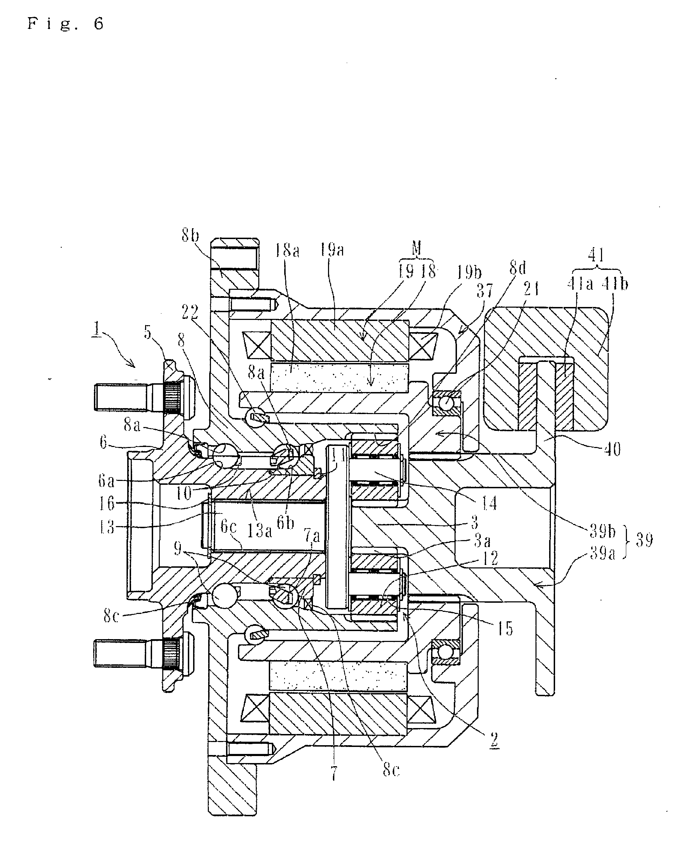

Fig. 6 is a longitudinal-section view of a fourth embodiment of a motor-driven wheel driving apparatus of the present invention. This fourth embodiment is different from the previous embodiments (Fig. 3 and Fig. 5) only in the structure of the braking section. Thus same numerals are used herein as those used in the previous embodiments for designating the same structural elements.

The rotation member 39 comprises a base portion 39a formed as a hat-like configuration and a cylindrical portion 39b adapted to be fitted onto the base portion 39a in a torque transmittable manner via a serration therebetween. The rotor portion 18 forming the electric motor "M" is secured on the outer circumferential surface of the cylindrical portion 39b. The base portion 39a is integrally formed on its inboard end with a brake rotor 40 with which a disc brake 41 is associated. The disc brake 41 comprises brake pads 41 for sandwiching the brake rotor 40 and a brake caliper 41b for urging the brake pads 41 against the brake rotor 40 via an actuator (not shown).

According to this embodiment, since the brake rotor 40 is integrally formed with the rotation member 39 forming the electric motor "M", it is possible to reduce the manufacturing cost due to common use of structural parts. In addition, since the braking action can be effected by the disc brake 41 prior to speed reduction effected by the planetary reduction gear 2, it is possible to provide a light and compact disc brake. The disc brake 41 has also a function of parking brake.

### Fifth embodiment

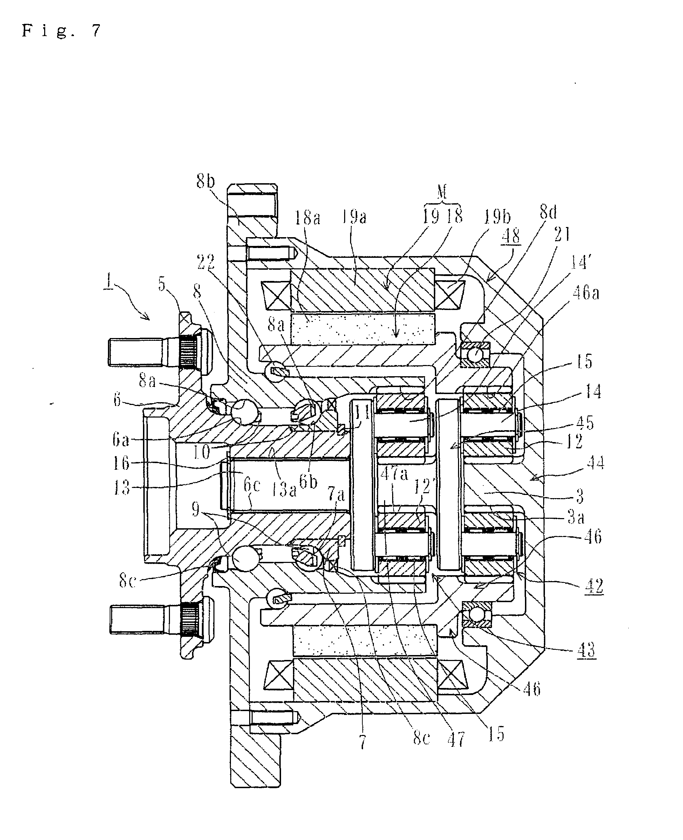

Fig. 7 is a longitudinal-section view of a fifth embodiment of a motor-driven wheel driving apparatus of the present invention. This fifth embodiment is different from the first embodiments (Fig. 1) only in the structure of the planetary reduction gear. Thus same numerals are used herein as those used in the first embodiment for designating the same structural elements.

This embodiment comprises the wheel bearing 1 and two planetary reduction gears 42 and 43 mounted on the wheel bearing 1. The first reduction gear 42 includes the sun gear (stationary element) 3, four (4) planetary gears (planetary elements) effecting planetary motion around the sun gear 3, and carrier pins (output elements) 14 rotatably supporting the planetary gears 12 via rolling bearings 15 relative to the first connecting shaft 45. A plurality of the carrier pins 14 are projected from the first connecting shaft 45 at an outer circumferential portion. The inner circumferential surface at the inboard side of the rotation member (input element) 46 is formed with internal teeth 46a meshing with the planetary gears 12 to form a solar type planetary reduction gear 42.

On the other hand, the second planetary reduction gear 43 comprises a sun gear (input element) 47 integrally formed with the first connecting shaft 45, four (4) planetary gears (planetary elements) 12' effecting planetary motion around the sun gear 47, and carrier pins (output elements) 14' rotatably supporting the planetary gears 12' relative to the second connecting shaft 13 via the rolling bearings 15. The inner circumferential surface at the inboard side of the outer member (stationary element) is formed with internal teeth 8d meshing with the planetary gears 12'.

The rotation member 46 having integrated rotor portion 18 is rotated by supplying electric energy to the electric motor "M", and the rotation of the rotation member 46 is transmitted with speed reduction to the first connecting shaft 45 via the planetary gears 12. The rotation of the first connecting shaft 45 is transmitted to the planetary gear 12' via the sun gear 47 integrated with the first connecting shaft 45 and then to the second connecting shaft 13 via the revolution of the planetary gear 12' (i.e. carrier pin 14') and finally to the hub wheel 6 with speed reduction via the serration 13a.

The speed reduction ratio of the first and second planetary gears 42 and 43 can be appropriately adjusted by changing the tooth ratio of the internal teeth 46a of the rotation member and the internal teeth 8d of the outer member 8. For example, the reduction ratio in a range of 3~9 can be set when the planetary reduction gear is applied to the motor-driven wheel driving apparatus of electric vehicle. Whole speed reduction ratio can be determined by the product of the reduction ratio "m" of the first planetary reduction gear 42 and the reduction ratio "n" of the second planetary gear 43, and thus expressed as "m -n". Accordingly, since a very large reduction ratio can be obtained within a small space, it is possible to substantially reduce the weight and size of the electric motor "M".

Similarly to the previous embodiments, according to this embodiment, since the planetary gear 12' forming the second planetary reduction gear 43 is assembled into the inboard side end of the outer member 8 forming the wheel bearing 1, it is possible to assure a sufficient space for the bearing portion and thus to easily assemble the second planetary reduction gear 43. In addition since the first and second planetary reduction gear 42 and 43 can equally support the moment load via the double row bearings, it is possible to suppress application of the offset load to the planetary gears 12 and 12' and the sun gear 3 and 47. It is also possible to reduce the axial size of the apparatus since the electric motor "M" is separably united to the body mounting flange 8b of the outer member 8 via the stator housing 44. Furthermore, since the driving section 48 can be contained within a knuckle (not shown), it is possible to protect the electric motor "M" from external force such as flying stone.

### Applicability to industry

The motor-driven wheel driving apparatus of the present invention can be applied to various kinds of vehicles such as 4-wheeled vehicles, motorcycles, golf carts, 2 or 4 wheeled carts for aged or physically handicapped persons, handy carts used in construction or transport fields and others powered by fuel cells or batteries.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

## Claims

1. A motor-driven wheel driving apparatus comprising:
a wheel bearing (1), a planetary reduction gear (2), and a driving section (4) having an electric motor (M) for driving the planetary reduction gear (2) and a rotation member (23, 32, 39);
the wheel bearing (1) including a hub wheel (6) formed with a wheel mounting flange (5) on its one end, an inner ring (7) formed on its outer circumferential surface with at least one of double row inner raceway surfaces (6a, 7a), an outer member (8) formed with double row outer raceway surfaces (8a) on its inner circumferential surface oppositely to the inner raceway surfaces, and double row rolling elements (9) rollably arranged between the inner and outer raceway surfaces;
the planetary reduction gear (2) including an input element (3) mounted on the rotation member (23, 32, 39), a stationary element mounted on the inner circumferential surface of the outer member (8), a plurality of planetary elements (12) arranged between the stationary element and
the input element (3), and an output element (14) for supporting the planetary elements (12) rotatably relative to a connecting shaft (13);
the driving section (4) forming the electric motor (M) and having a stator housing (25, 37) mounted on the outer member (8), a stator portion (19) contained within the stator housing (25, 37), and a rotor portion (18) secured on the rotation member (23, 32, 39) and arranged oppositely to the stator portion (19) via a predetermined air gap;
the connecting shaft (13) removably and torque-transmittably connected to the hub wheel (6) and adapted to drive the wheel by transmitting the rotation of the electric motor (M) to the hub wheel (6) via the planetary reduction gear (2);
**characterized in that**
the inner ring (7) is press-fitted on a cylindrical portion (6b) of the hub wheel (6) and a braking apparatus is integrally mounted on the rotation member (23, 32, 39).

2. A motor-driven wheel driving apparatus of claim 1 wherein the planetary reduction gear (2) comprises a sun gear (3) mounted on the rotation member (23, 32, 39), a plurality of planetary gears (12) meshing both with external teeth (3a) of the sun gear (3) and with internal teeth (8d) formed on the inner circumferential surface of the outer member (8), and a carrier pin (14) projected from the outer circumferential portion of the connecting shaft (13) for rotatably supporting the planetary gears (12).

3. A motor-driven wheel driving apparatus of claim 1 or 2 wherein the braking apparatus is a parking brake.

4. A motor-driven wheel driving apparatus of claim 3 wherein the parking brake comprises an intermediate member (27, 34) held on the stator housing (25, 37), and an actuator (30) for engaging and disengaging the intermediate member (27, 34) with the rotation member (23, 32) by displacing the intermediate member (27, 34).

5. A motor-driven wheel driving apparatus of claim 4 wherein a plurality of recesses (24a, 35) are formed on the rotation member (23, 32), the stator housing (25, 37) is formed with a plurality of through apertures (26a) corresponding to the recesses (24a, 35), the intermediate member (27, 34) having tapered surfaces (27a, 34a) is contained in the through passage, and the intermediate member (27, 34) can be adapted to be engaged and disengaged with the recess (24a, 35) with being displaced by a cylindrical member (28, 33) engaging the tapered surface (28a, 33a).

6. A motor-driven wheel driving apparatus of claim 4 wherein a plurality of recesses (35) and tapered surfaces (33a) are formed on the rotation member (32), the intermediate member (34) is formed with projected portions (36) and tapered surfaces (34a) adapted to be engaged respectively with the recesses (35) and the tapered surfaces (33a) of the rotation member (32), and the intermediate member (34) is held so as to be able to transmit a torque to the stator housing (37) and also to be axially displaced.

7. A motor-driven wheel driving apparatus of any one of claims 1~6 wherein the planetary reduction gear has first and second planetary gears (42, 43) connected each other via a connecting shaft (45), and the power of the electric motor (M) can be adapted to be transmitted to the hub wheel (6) with reducing the rotation of the electric motor (M) to two steps via the first and second planetary reduction gears (42, 43).

8. A motor-driven wheel driving apparatus of claim 7 wherein the first planetary reduction gear (42) comprises a sun gear (3) mounted on the stator housing (44), a plurality of planetary gears (12) meshing both with external teeth (3a) of the sun gear (3) and with internal teeth (46a) formed on the inner circumferential surface of the rotation member (46), and a carrier pin (14) for rotatably supporting the planetary gears (12) relative to a first connecting shaft (45); the second planetary reduction gear (43) comprises a sun gear (47) mounted on the first connecting shaft (45), a plurality of planetary gears (12') meshing both with external teeth (47a) of the sun gear (47) and with internal teeth (8d) formed on the inner circumferential surface of the outer member (8), and a carrier pin (14') for rotatably supporting the planetary gears (12') relative to a second connecting shaft (13); and the second connecting shaft (13) is connected to the hub wheel (6).

9. A motor-driven wheel driving apparatus of any one of claims 1~8 wherein the stator housing (25, 37, 44) is separably fastened to the outer member (8).

## Patentansprüche

1. Motorgetriebene Radantriebsvorrichtung, welche umfasst:
ein Radlager (1), ein Planetenuntersetzungsgetriebe (2) und einen Antriebsabschnitt (4), der einen Elektromotor (M) zum Antreiben des Planetenuntersetzungsgetriebes (2) und ein Rotationselement (23, 32, 39) aufweist;
wobei das Radlager (1) eine Radnabe (6), das mit einem Radbefestigungsflansch (5) an seinem einen Ende ausgebildet ist, einen Innenring (7), der auf seiner Außenumfangsfläche mit mindestens einer von doppelreihigen Innenlaufbahnflächen (6a, 7a) ausgebildet ist, ein äußeres Element (8), das mit doppelreihigen Außenlaufbahnflächen (8a) auf seiner Innenumfangsfläche gegenüber den Innenlaufbahnflächen ausgebildet ist, und doppelreihige Wälzelemente (9), die zwischen den Innen-und Außenlaufbahnflächen rollfähig angeordnet sind, aufweist;
wobei das Planetenuntersetzungsgetriebe (2) ein Eingangselement (3), das auf dem Rotationselement (23, 32, 39) angebracht ist, ein stationäres Element, das auf der Innenumfangsfläche des äußeren Elements (8) angebracht ist, mehrere Planetenelemente (12), die zwischen dem stationären Element und dem Eingangselement (3) angeordnet sind, und ein Ausgangselement (14) zum bezüglich einer Verbindungswelle (13) drehbaren Lagern der Planetenelemente (12) aufweist;
wobei der Antriebsabschnitt (4) den Elektromotor (M) bildet und ein Statorgehäuse (25, 37), das auf dem äußeren Element (8) angebracht ist, einen Statorabschnitt (19), der in dem Statorgehäuse (25, 37) enthalten ist, und einen Rotorabschnitt (18), der an dem Rotationselement (23, 32, 39) befestigt ist und gegenüber dem Statorabschnitt (19) mit einem Luftspalt dazwischen angeordnet ist, aufweist;
wobei die Verbindungswelle (13) lösbar und drehmomentübertragbar mit der Radnabe (6) verbunden ist und dazu eingerichtet ist, das Rad durch Übertragen der Drehung des Elektromotors (M) über das Planetenuntersetzungsgetriebe (2) auf die Radnabe (6) anzutreiben;
**dadurch gekennzeichnet, dass**
der Innenring (7) auf einen zylindrischen Abschnitt (6b) der Radnabe (6) aufgepresst ist und eine Bremsvorrichtung an das Rotationselement (23, 32, 39) angeformt ist.

2. Motorgetriebene Radantriebsvorrichtung nach Anspruch 1, wobei das Planetenuntersetzungsgetriebe (2) ein Sonnenrad (3), das auf dem Rotationselement (23, 32, 39) angebracht ist, mehrere Planetenräder (12), die sowohl mit Außenzähnen (3a) des Sonnenrades (3) als auch mit Innenzähnen (8d), die an der Innenumfangsfläche des äußeren Elements (8) ausgebildet sind, kämmen, und einen von dem Außenumfangsabschnitt der Verbindungswelle (13) vorstehenden Tragzapfen (14) zur drehbaren Lagerung der Planetenräder (12) umfasst.

3. Motorgetriebene Radantriebsvorrichtung nach Anspruch 1 oder 2, wobei die Bremsvorrichtung eine Feststellbremse ist.

4. Motorgetriebene Radantriebsvorrichtung nach Anspruch 3, wobei die Feststellbremse ein Zwischenelement (27, 34), das an dem Statorgehäuse (25, 37) gehalten wird, und einen Aktor (30) zum Ineingriffbringen und Außereingriffbringen des Zwischenelements (27, 34) mit dem Rotationselement (23, 32) durch Verschieben des Zwischenelements (27, 34) umfasst.

5. Motorgetriebene Radantriebsvorrichtung nach Anspruch 4, wobei mehrere Aussparungen (24a, 35) an dem Rotationselement (23, 32) ausgebildet sind, das Statorgehäuse (25, 37) mit mehreren Durchgangsöffnungen (26a) ausgebildet ist, die den Aussparungen (24a, 35) entsprechen, das konisch zulaufende Flächen (27a, 34a) aufweisende Zwischenelement (27, 34) in dem Durchgang enthalten ist und das Zwischenelement (27, 34) dazu geeignet sein kann, mit der Aussparung (24a, 35) in Eingriff und außer Eingriff gebracht zu werden, wobei es durch ein zylindrisches Element (28, 33) verschoben wird, das sich mit der konisch zulaufenden Fläche (28a, 33a) in Eingriff befindet.

6. Motorgetriebene Radantriebsvorrichtung nach Anspruch 4, wobei mehrere Aussparungen (35) und konisch zulaufende Flächen (33a) an dem Rotationselement (32) ausgebildet sind, das Zwischenelement (34) mit vorstehenden Abschnitten (36) und konisch zulaufenden Flächen (34a) ausgebildet ist, die dazu eingerichtet sind, mit den Aussparungen (35) bzw. den konisch zulaufenden Flächen (33a) des Rotationselements (32) in Eingriff gebracht zu werden, und das Zwischenelement (34) so gehalten wird, dass es in der Lage ist, ein Drehmoment auf das Statorgehäuse (37) zu übertragen und außerdem axial verschoben zu werden.

7. Motorgetriebene Radantriebsvorrichtung nach einem der Ansprüche 1 bis 6, wobei das Planetenuntersetzungsgetriebe ein erstes und ein zweites Planetengetriebe (42, 43) aufweist, die miteinander über eine Verbindungswelle (45) verbunden sind, und die Leistung des Elektromotors (M) so beschaffen sein kann, dass sie auf die Radnabe (6) mit Reduzierung der Drehzahl des Elektromotors (M) in zwei Stufen über das erste und das zweite Planetenuntersetzungsgetriebe (42, 43) übertragen wird.

8. Motorgetriebene Radantriebsvorrichtung nach Anspruch 7, wobei das erste Planetenuntersetzungsgetriebe (42) ein Sonnenrad (3), das an dem Statorgehäuse (44) angebracht ist, mehrere Planetenräder (12), die sowohl mit Außenzähnen (3a) des Sonnenrades (3) als auch mit Innenzähnen (46a), die an der Innenumfangsfläche des Rotationselements (46) ausgebildet sind, kämmen, und einen Tragzapfen (14) zur drehbaren Lagerung der Planetenräder (12) bezüglich einer ersten Verbindungswelle (45) umfasst; das zweite Planetenuntersetzungsgetriebe (43) ein Sonnenrad (47), das auf der ersten Verbindungswelle (45) angebracht ist, mehrere Planetenräder (12'), die sowohl mit Außenzähnen (47a) des Sonnenrades (47) als auch mit Innenzähnen (8d), die an der Innenumfangsfläche des äußeren Elements (8) ausgebildet sind, kämmen, und einen Tragzapfen (14') zur drehbaren Lagerung der Planetenräder (12') bezüglich einer zweiten Verbindungswelle (13) umfasst; und die zweite Verbindungswelle (13) mit der Radnabe (6) verbunden ist.

9. Motorgetriebene Radantriebsvorrichtung nach einem der Ansprüche 1 bis 8, wobei das Statorgehäuse (25, 37, 44) trennbar an dem äußeren Element (8) befestigt ist.

## Revendications

1. Appareil d'entraînement de roue motorisée comprenant :
un roulement de roue (1), un réducteur planétaire (2) et une section d'entraînement (4) avec un moteur électrique (M) pour entraîner le réducteur planétaire (2) et un organe rotatif (23, 32, 39) ;
le roulement de roue (1) incluant un moyeu de roue (6) formé avec un flasque (5) de montage d'une roue à une extrémité, une bague interne (7) formée à sa surface périphérique externe avec au moins l'une parmi des surfaces (6a, 7a) de roulement interne à double rangée, un organe externe (8) formé avec des surfaces de roulement externes (8a) à double rangée à sa surface périphérique interne, à l'opposé des surfaces de roulement internes, et des organes de roulement (9) en double rangée agencés à roulement entre les surfaces de roulement interne et externe ;
le réducteur planétaire (2) comprenant un organe d'entrée (3) monté sur l'organe rotatif (23, 32, 39), un organe fixe monté sur la surface périphérique interne de l'organe externe 8, plusieurs pignons satellites (12) agencés entre l'organe fixe et l'organe d'entrée (3), et un organe de sortie (14) pour supporter les pignons satellites (12) à rotation par rapport à un arbre de liaison (13) ;
la section d'entraînement (4) formant le moteur électrique (M) et comprenant un bâti de stator (25, 37) monté sur l'organe externe (8), une partie stator (19) contenue dans le bâti de stator (25, 37) et une partie rotor (18) fixée sur l'organe rotatif (23, 32, 39) et agencée à l'opposé de la partie stator (19) avec un entrefer prédéterminé ;
l'arbre de liaison (13) relié de manière démontable et en état de transmettre un couple au moyeu de roue (6), et prévu pour entraîner la roue en transmettant la rotation du moteur électrique (M) au moyeu de roue (6) par l'intermédiaire du réducteur planétaire (2) ;
**caractérisé en ce que**
la bague interne (7) est sertie sur une partie cylindrique (6b) du moyeu de roue (6) et un appareil de freinage est monté d'une pièce sur l'organe rotatif (23, 32, 39).

2. Appareil d'entraînement de roue motorisée selon la revendication 1, dans lequel le réducteur planétaire (2) comprend un pignon planétaire (3) monté sur l'organe rotatif (23, 32, 39), plusieurs pignons satellites (12) engrenant à la fois avec des dents externes (3a) du pignon planétaire (3) et avec des dents internes (8d) formées sur la surface périphérique interne de l'organe externe (8), et une broche de support (14) ressortant de la partie périphérique externe de l'arbre de liaison (13) pour supporter à rotation les pignons satellites (12).

3. Appareil d'entraînement de roue motorisée selon la revendication 1 ou 2, dans lequel l'appareil de freinage est un frein de stationnement.

4. Appareil d'entraînement de roue motorisée selon la revendication 3, dans lequel le frein de stationnement comprend un organe intermédiaire (27, 34) maintenu sur le bâti de stator (25, 37), et un actionneur (30) pour mettre en prise et dégager l'organe intermédiaire (27, 34) par rapport à l'organe rotatif (23, 32), par déplacement de l'organe intermédiaire (27, 34).

5. Appareil d'entraînement de roue motorisée selon la revendication 4, dans lequel plusieurs dépressions (24a, 35) sont formées sur l'organe rotatif (23, 32), le bâti de stator (25, 37) est formé avec plusieurs ouvertures traversantes (26a) correspondant aux dépressions (24a, 35), l'organe intermédiaire (27, 34) présentant des surfaces biseautées (27a, 34a) est contenu dans le passage traversant, et l'organe intermédiaire (27, 34) peut être adapté pour être mis en prise avec, et dégagé de la dépression (24a, 35) en étant déplacé par un organe cylindrique (28, 33) engageant la surface biseautée (28a, 33a) .

6. Appareil d'entraînement de roue motorisée selon la revendication 4, dans lequel plusieurs dépressions (35) et surfaces biseautées (33a) sont formées sur l'organe rotatif (32), l'organe intermédiaire (34) est formé avec des parties saillantes (36) et des surfaces biseautées (34a) adaptées pour venir en prise respectivement avec les dépressions (35) et les surfaces biseautées (33a) de l'organe rotatif (32), et l'organe intermédiaire (34) est maintenu de façon à pouvoir transmettre un couple au bâti de stator (37) et également pour être déplacé axialement.

7. Appareil d'entraînement de roue motorisée selon l'une quelconque des revendications 1-6, dans lequel le réducteur planétaire possède un premier et un second réducteurs planétaires (42, 43) reliés l'un à l'autre par un arbre de liaison (45), et la force du moteur électrique (M) peut être adaptée pour être transmise au moyeu de roue (6) avec réduction de la rotation du moteur électrique (M) en deux étapes, par le premier et le second réducteurs planétaires (42, 43).

8. Appareil d'entraînement de roue motorisée selon la revendication 7, dans lequel le premier réducteur planétaire (42) comprend un pignon planétaire (3) monté sur le bâti de stator (44), plusieurs pignons satellites (12) engrenant à la fois avec des dents externes (3a) du pignon planétaire (3) et avec des dents internes (46a) formées sur la surface périphérique interne de l'organe rotatif (46), et une broche de support (14) pour supporter à rotation les pignons satellites (12) par rapport à un premier arbre de liaison (45) ; le second réducteur planétaire (43) comprend un pignon planétaire (47) monté sur le premier arbre de liaison (45), plusieurs pignons satellites (12') engrenant à la fois avec des dents externes (47a) du pignon planétaire (47) et avec des dents internes (8d) formées sur la surface périphérique interne de l'organe externe (8), et une broche de support (14') pour supporter à rotation les pignons satellites (12') par rapport à un second arbre de liaison (13) ; et le second arbre de liaison (13) est connecté au moyeu de roue (6).

9. Appareil d'entraînement de roue motorisée selon l'une quelconque des revendications 1-8, dans lequel le bâti de stator (25, 37, 44) est fixé séparément à l'organe externe (8).
